# EUROPEAN PATENT APPLICATION

(11) **EP 4 635 699 A1**
(43) Date of publication of application: **22.10.2025**
(21) Application number: 22968078.0
(22) Date of filing: 20.12.2022
(51) Int. Cl.: B29B 9/14, B29C 48/395, B29C 64/106, B29C 64/295, B33Y 30/00

(54) **3D EXTRUDER FOR POLYMER CONCRETE, METHOD FOR PRODUCING POLYMER CONCRETE-MICRO-AGGREGATES, AND SAID CONCRETE**

(30) Priority: 15.12.2022 CL 20223582
(71) Applicant: Universidad Diego Portales, Santiago (CL); Máfico SpA, Maipú Santiago (CL)
(72) Inventor: CONTRERAS PROVOSTE, Diego Aldair, Santiago (CL); TORRES CORTÉS, Arturo Andrés, Santiago (CL); CABARGAS MORI, Nicolás, Santiago (CL)
(74) Representative: Pons IP
(86) International application number: PCT/CL2022/050133
(87) International publication number: WO 2024/124363

(57) **Abstract**

**The** present invention is related to a thermo-fusion by 3D printing to polymer concrete based on a mixture micro aggregates, including volcanic sand composed mainly basalt with great resistance to compression and enriched in iron oxide, and polylactic acid (PLA), a composite bioplastic based on beet, corn or sugar cane, of reusable character conferring a greater elasticity and functioning as agglomerant or thermomelted polymer. Mixture is performed in dry by a thermo-fusion extrusion by 3D printing, and is useful in construction and repairing structures, pavements and bridges, decorative panels, piping of structural or wastewater, single-person or group housing construction, including multiplanetary housings. Also, the invention is related to an extruded concrete polymer from such extruder surpasses app. 6-folds the PLA's structural capacity without sand and having a resistance of 400 kgf/cm2 and method for preparing it.

## Description

### FIELD OF THE INVENTION

The present invention is related to the construction area and repair of structures, pavements and bridges, decorative panels, sewage or structural pipes, among others. Particularly, the invention is related to polymer concrete to such purposes, a method for preparing the same and a 3D printing thermo-fusion extruder allowing the obtention, wherein such polymer concrete is based on a mixture of microaggregates, including, volcanic sand mainly composed by basalt having a big resistance to compression, and enriched in iron oxide, similar to the present in Mars and a biopolymer based on beet, corn and cane sugar, of reusable character conferring a greater elasticity and working as binder or thermo-fusion polymer, and wherein the concrete polymer is obtained by a dry mixing, and by 3D printing in the present thermo-fusion extruder.

### ANTECEDENTS

Several polymer concrete preparations are known having constructive purposes, structural fixing, among others, and thus, several methods and equipment to prepare the same and method of construction are available, among them the following can be mentioned: KR101894845B1 (Bon Systems Co., Ltd.), KR102020359B1 (Inston Co., Ltd) and US20160038655A1 (Louisiana Tech Research Corp), wherein KR101894845B1 is related to a pellet extruder having an entry to receiving; a driving unit applying rotational motion; an extruder screw rotating due to the rotating movement applied by the drive unit and an spiral slot transferring pellet; an space to supply pellet injected from the entry of pellet to the spiral slot; a heating block located at the end of the extruder screw melting pellet by heat; a lancet extruding the heated pellet in the heating block by rotation of the extruder screw, and a unity of extrusion pressure control located between the drive unit and the extruder screw, controlling the extrusion volume of fused pellet by controlling the distance between the extruder screw and the lancet corresponding to the extrusion pressure in the lancet, wherein the spiral slot formed at the extruder screw has a depth gradually decreasing from the space of pellet supplying to the lancet. Extrusion volume of fused pellet can automatically be adjusted to be able of a uniform extrusion, and then, high quality and precision 3D printing is provided.

KR102020359B1 is related to a modular lancet controlling pressure, and then, the pellet extrusion velocity, and more particularly, a removable lancet to 3D printing extruding by melting, a linear material and a pellet, a pressure of mixing, a determined ratio. A extrusion cylinder supplies pellet at a longitudinal direction, at the center of the extrusion cylinder, and a plurality of heaters located at the external circumferential surface of the extrusion cylinder and a screw extrude pellet at the extrusion cylinder, rotatably joined at a passage supplying hollowed filaments and a linear material supplied at the external circumferential surface, and a pressure sensor measure a change of pressure before extruding the fused pellet through the tip of the lancet and extruding the linear material at the center of the fused pellet by the heater, and when rotating adjusts, the screw rotation velocity according to the measured pressure and a controlled motor by the screw, control the extruding velocity.

US20160038655A1 is related to a method to manufacture a bioactive implant including the steps of (a) forming a mixture of a bioactive agent and a settlement agent able to transit from a flow state to a rigid state; (b) converting the mixture into a fluid state; and (c) transiting the mixture in a solid state in the implant form.

While US10618217 (Branch Technology Inc) and US20170291364 (Timothy W. Womer) is related to a conic extruder having an Arquimedes's screw, wherein US10618217 is related to an equipment of manufacturing an additive, under free way, process and products including commercial or residential buildings, among others. Movable extruder provides the extrusion which solidifies under an opened space to create building "scaffoldings" or "skeletons" and other products. Elongated extrusion elements are fused, with each other, or connected by other means to form a cellular structure. A filling material such an insulating polymer foam can simultaneously or later be located inside the cellular structures to contribute with resistance, rigidity, insulation, barrier and other desired properties.

US20170291364 is related to a single-screw micro-extruder to 3D printing including a feeding chamber with an opening to receive solid plastic pellets. An extrusion barrel extended from the feeding chamber and having a conical internal perforation between the input and output ends. The perforation has a mouth at the input and input end and an output opening at the output end with a fusion section therebetween. A rotatory screw is joined to a printer's torque driver and is extended through the feeding chamber and the barrel's conical perforation. A constant or tapered core's diameter at the screw's root, from the barrel's input end to the output end, forming a decreasing channel of deep root at a helical via to compress between the surface of the core's root and an internal surface of the perforation to pressing a melting at the barrel's fusion section to output an extrusion lancet.

JP6733040B2 (Branch Technology Inc), KR20170015952A (Chonnam National University Industry-Academic Cooperation Foundation), KR20190031959A (K-Labs), KR20210070160A (Korean Electronics and Telecommunications Research Institute), US20190134972A1 (JKM Technologies LLC) y US20190255611A1 (JKM Technologies LLC) is related to an extruder having a shovel, wherein JP6733040B2 is related to a device to produce an structure used as a scaffolding on which other materials can be applied and a process for manufacturing a shape-free additive. Also, the invention is related to an extruder depositing solidified material into an open space and using mechanisms of movement to connect points and create a passage to create an object. The structure for manufacturing can be buildings, ships and planes, among others.

KR20170015952A is related to an interchangeable extruder to 3D printers and to a 3D printer comprising it, wherein the interchangeable extruder comprises: a motor generating rotational power; a shovel supplying a solid material to 3D printing; an extrusion-transport unit including an extrusion cylinder having an extrusion screw inside and installed on a side of the shovel, extruding a 3D printing material supplied through a shovel carried out by a motor, and transport a 3D printing material to a heating unit melting a 3D printing material; and a lancet unit including an interchangeable discharging lancet inside or extruding a 3D printing material fused by a heating unit into a filament, and at the same time, 3D printing, an structure. **The** interchangeable extruder can be used as powder, beads and pellets, without using an apparatus producing separated filaments.

KR20190031959A is related to an extruder located into a 3D printer using a scheme modeled by a fused deposition (FDM) to melt and discharging an-output material. Extruder including: a unit for transporting material including a case to the unit of transport having an unit for the entrance of material to introduce output materials and a unit of discharge of material to discharge the output materials formed therein, as well the route of material transport in cylindric form connected to a material unity of material discharge from the unit of material entrance, a first screw located to extending up to the unit of material discharge after passing through the route of material transport from the unit of material entrance to move output materials from the unity of material entrance up to the unit of material discharge, a first heater to melting the output materials passing through the route of material transport, and a first drive motor to rotating the first screw; and an unit of material output including a case of output unit having a material storing unit to store the fused output materials and discharged from the unit of material discharge of the material transport unit and a unit of material discharge to discharge the fused output materials formed therein while having a cylinder way of material flow connected to a unit of material discharge from the unit of material storing, a nozzle located into the unit of material discharge of the case of the output unit, a second screw located to extend the unit of material discharge after passing through a way of material flow from the material storing unit to move the fused output materials from the unit of material storing to a unit of material discharge and removing output material through the nozzle, a second heater to heating the output materials passing through the way of material flow at an objective output temperature, and a second drive motor to rotate the second screw.

KR20210070160A is related to a device for supplying granules including: a chamber of supplying to receive granules; a rotatory unit connected to a drive unit; and a unit of supplying joined to a chamber of supplying. Rotatory unit including: a rotatory axis extending a first direction; a screw joined to an external surface of rotating axis and advancing in the first direction; and a scraper extended from the external surface of the rotating axis at a direction crossing the first direction. Unit of supplying surrounds a screw. The scraper is located on the screw and is located inside the chamber of supplying.

US20190134972A1 is related to a device and method for manufacturing an object to a user for fused deposition. A screw conveyor transports a plurality of solid thermoplastic granules from a shovel up to a barrel. A heating element joined to a barrel melts the solid thermoplastic granules inside the barrel producing thus a thermoplastic liquid. The thermoplastic liquid is extruded through a nozzle covers one end of the cylinder, consequently solidifying the extruded thermoplastic liquid in the object. A system of computerized controls either, the thermoplastic liquid caudal, adjusting the rotation of a motor joined to a screw conveyor, as well the position of the nozzle on the construction surface according to the tridimensional shape of the object. The device and the method are specially adequate to the mass production of custom shoes and other objects, in which the thermoplastic material can be easily combined with custom colorants and blowing agents.

US20190255611A1 is related to a device and method for manufacturing an object to a user by fused deposition. A screw conveyor transports a plurality of solid thermoplastic granules from a shovel up to a barrel. A heating element joined to a barrel melts the thermoplastic granules inside the barrel, producing thus a thermoplastic liquid. The thermoplastic liquid is extruded through a nozzle covering one end of the cylinder, consequently solidifying the extruded thermoplastic liquid in the object. A system of computerized control controls either, the thermoplastic liquid caudal adjusting the rotation of a motor joined to a screw conveyor as well the position of the nozzle on the construction surface according to a tridimensional shape of the object. The device and the method are especially adequate to the mass production of shoes and other custom objects, in which the thermoplastic material can be easily combined with colorants and custom blowing agents.

The present invention in turn proposes a thermo-fusion extruder by 3D printing to polymer concrete based on a mixture of micro aggregates, this is, aggregates with an average size within the range of 0.125-0,25mm (broader), preferably within the range composed into 3 granulometries between 0.062, 0.125 and 0.25 as our hypothesis to achieve a right structural skeleton (narrow band of very good results), including volcanic sand mainly composed by basalt with a great resistance to compression, enriches on iron oxide, hematite, pyroxene and olivine, similar to the present in Mars, and polylactic acid (PLA), a compostable bioplastic based on beet, corn or sugar cane, having reusable character conferring a higher elasticity, resistance to traction and functioning as agglomerant or thermo-fusion polymer. The mixture is performed in dry through extrusion by thermo-fusion by 3D printing, being the 3D extruder easy to assembly and of low cost. The polymer concrete thus obtained is useful in construction and repairing the structures, pavement and bridges, decorative panels, piping of waste or structural water, single or group housing constructions, including multiplanetary housings. The present invention is also related to an extruded polymer concrete from such extruder and having a structural capacity over 6-folds than the structural capacity of PLA without sand and having a resistance of 400 kgf/cm², and its method of preparation.

### BREIF DESCRIPTION OF THE INVENTION

The present composite of polylactic acid (PLA) with micro aggregates shows, as reported by the general related literature, a loading capacity to compression of 1.260 kgf/cm². On the other side, polymer concrete has mechanical properties such as, tension: 1260 kgf/cm², Flexion: 1890 kgf/cm², impact 390 kgf/cm² MTA-BME (2012 Research Group to science and technology of composite), XIX International Conference of Composite Materials (The Hungarian Academy of Sciences, Committee of Fibre- and Composite Technology (November 13, 2012)) are known. The present invention provides polymer concrete generated by additive manufacture with a resistance of 400 kgf/cm² and without controlling PLA temperature, and thus, the polymer concrete can show fragmentation and micro-fissures, reducing its structural capacity. The above would not be a disadvantage since all the commercial concretes show micro-fissures as a standard feature. Thus, the present polymer concrete results competitive in relation to a two-floor standard building concrete due to its low environmental impact.

On the other side, monolytic-level PLA resists a compression of 100 kgf/cm². Then, although during the additive manufacture of the PLA compostable or composite material and micro aggregates can lose 50% of resistance, anyway, surpasses app. 6-folds the building capacity of PLA without sand, and continues being competitive in structural capacity with the standard PLA filament.

The present invention is also related to a 3D extruder which can easily disassembly, complemented, repaired and of low cost, comprising some pieces of own design, including a main body to the extruder and an Arquimedes's screw. This generates a radical difference with Al Space Factory or Technology and Multi-planetary Architecture Agency to explore space and sustainably inhabit the earth, to having a very accessible cost, easy transport, assembly, repairing and complementing.

Thermofusion-based 3D pellet extruder allows the use of a variety of thermo-fusion polymers such as PLA, ABS, TPU, PET, among others, and thus, polymer-aggregates combinations can be originated, which can be selected depending on the use which is intended to the elements or products to be manufactured by the extruder.

The main difference of the present invention is the present extruder allows a thermo-fused polymer concrete composite which up to the filing of the present invention under the best inventor's acknowledge is not known. The use of micro aggregates as sand compared to all the known technologies requires an extruder having own features inside, the internal material can have a proper hardness and be able to resist the micro aggregate's abrasion as well the body as the Archimides's screw, which is in charge to push the material through the extruder, and thereby, these can have an own design.

### BREIF DESCRIPTION OF DRAWINGS

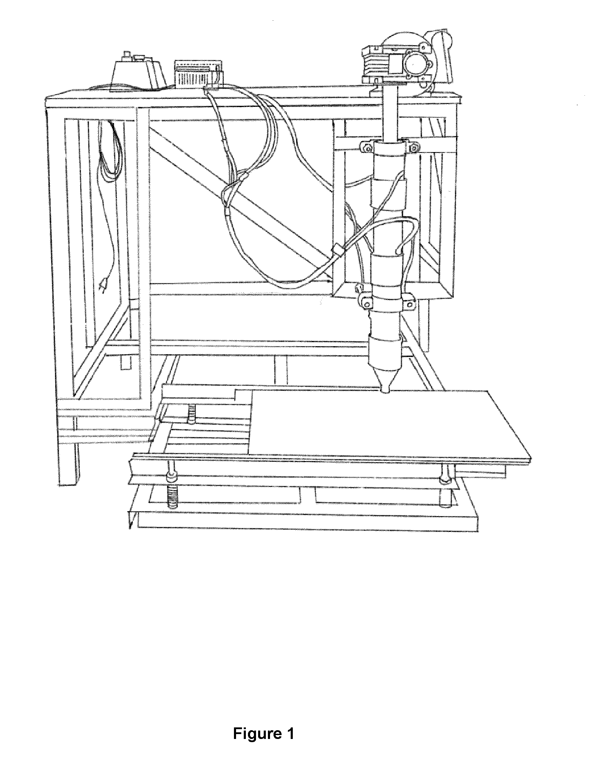

**Figure 1** Extruder Prototype and its numbered parts.

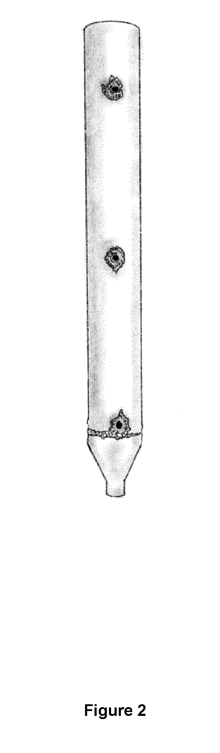

**Figure 2** Main Extruder's body can be appreciated the change of a nozzle having a lower size to reduce the flow and increasing of the length of the barrel due to an increase of the screw's length as manufactures in a mechanical lathe.

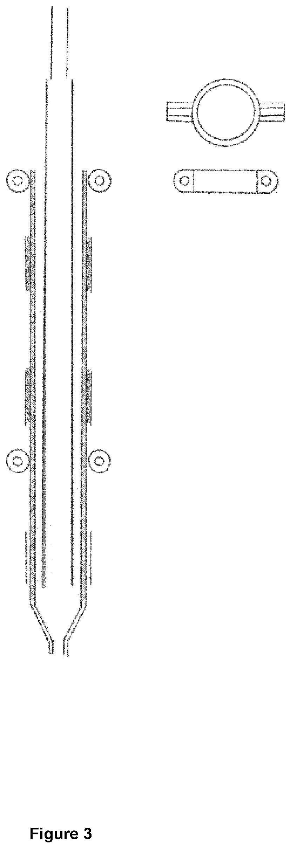

**Figure 3** Extruder's working planimetries.

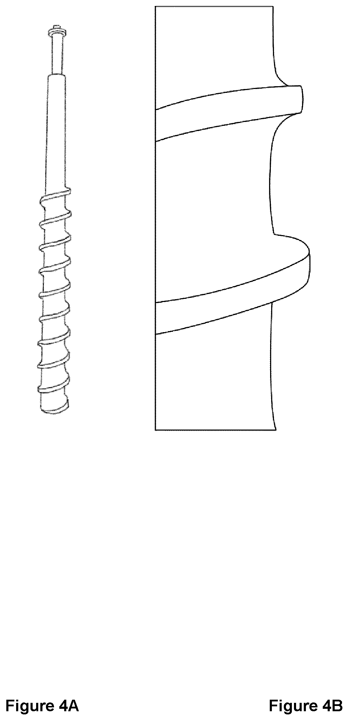

**Figures 4A and 4B** Archimide's screw corresponding to the Extruder, in which substantial amendments are added in thread terms and conical geometry of the same.

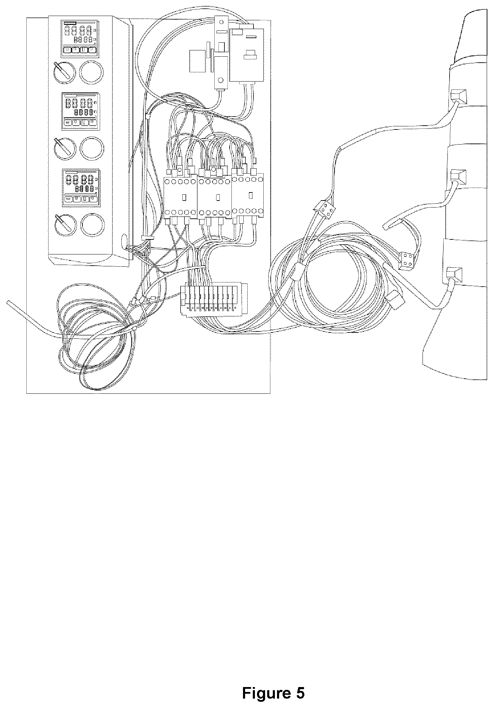

**Figure 5** electric heating system.

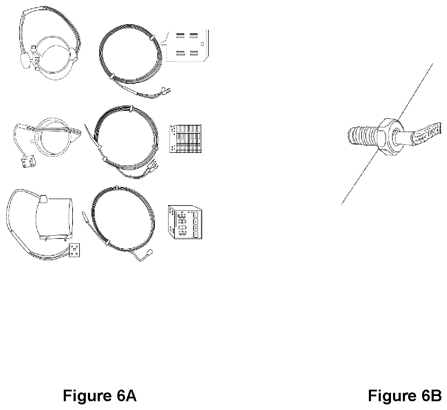

**Figures 6A and 6B** Detailed heating system, heating nozzles are enumerated (from left to right), the pin-type thermal sensor and controller.
**Figure 7** Labelled probe sampling on a graduated surface.
**Figure 8** Details of preliminary results of emptying and extrusion.

### DETAILED DESCRIPTION OF THE INVENTION

The present extruder to polymer concrete allows thermofusion of a composite material of micro aggregates and thermomelting polymer at an adequate scale to generate an extrusion process. The extruder can print under a CNC logic, being such concept understanding as Computarized Numeric Control, which is all those devices having the capability of controlling position and velocity of motors acting on the machine's axis to perform movements which cannot be manually achieved as circles, diagonal lines and complex figures. As an example, a volume 50 x 50 x 50 cm. The use of the present extruder depends on its installation in a standard CNC system, and thus, has a thermal isolating system allowing eliminating the thermal power transference from the extruder forward the CNC system.

The present extruder to polymer concrete by thermofusion, comprising:
a) A main body, receipt in charge of containing the material flow to be extruded by an end, and corresponding to a hollow steel piping containing the Archimedes's push screw, heating generating electric collars and a motor generating torque to the Archimede's screw. At the top end, the main body has a shovel allowing the pass of raw material consisting of polylactic acid (PLA) pellet and micro aggregates, and at the bottom end, the main body has a steel extrusion nozzle able to support temperatures varying between 0° and 300°C and allowing the pass of the composite forward the exterior,
b) A mean for generating torque, preferably, a motor of torque, in charge of mixing PLA and micro aggregates either at inside of the main body while a worm gear or Archimedes's screw receiving the torque through a motor connected at the end and which can rotate at a variable velocity and potency and which can be previously set as required,
c) A heating system consisting in means for generating temperature or near heating soruces, in charge of melting plastic, preferably, band heaters or collars of the extruder's main body, which can achieve a temperature between 150°C and 300°C, and thus, can melt plastic without burning it and achieving a viscosity allowing a mix with the micro aggregates and generating an homogeneous mix which can be transported by worm gear up to outcoming by the extruder's bottom end.

The present polymer concrete 3D extruder by thermofusion allowing in addition the use of a variety of polymers such as PLA, ABS, TPU, PET, among others, being possible to incorporate different granulometries, and thereby, differences in micro-aggregates granulometries can be incorporated, and thereby, a variety of combinations polymer-aggregates can be originated, which can vary depending on the use either esthetical or structural as wished to the elements or products as desired to manufacture.

The extruded concrete polymer of the present invention comprises a composite polymer matrix mixed with micro-aggregates, wherein the range of ratio by weight composite polymer to micro-aggregates is 120 gr PLA and 180 gr micro-aggregates, and preferably such ratio is 60% micro-aggregates and 40% PLA, wherein microaggregates are selected preferably from volcanic sand composed mainly of basalt having a great resistance of compression, and enriched in iron oxide, and such composite polymer preferably is a composite biopolymer, and even more preferably, such biopolymer is selected from polylactic acid (PLA).

The present method of preparing a concrete polymer, comprising:
a) Extruding into a thermofusion 3D extruder as described before, a composite polymer matrix mixed with micro-aggregates, wherein the range of ratio by weight composite polymer to micro-aggregates is 120 gr PLA and 180 gr micro aggregates, and preferably, such ratio is 60% micro aggregates and 40% PLA, wherein micro aggregates is selected preferably, from volcanic sand mainly composed of basalt having great resistance to compression, and enriched in iron oxide, and wherein such composite polymer preferably is a composite biopolymer, and even more preferably such biopolymer is selected from polylactic acid (PLA).

### Example 1: Preparation of composite material PLA + micro aggregates

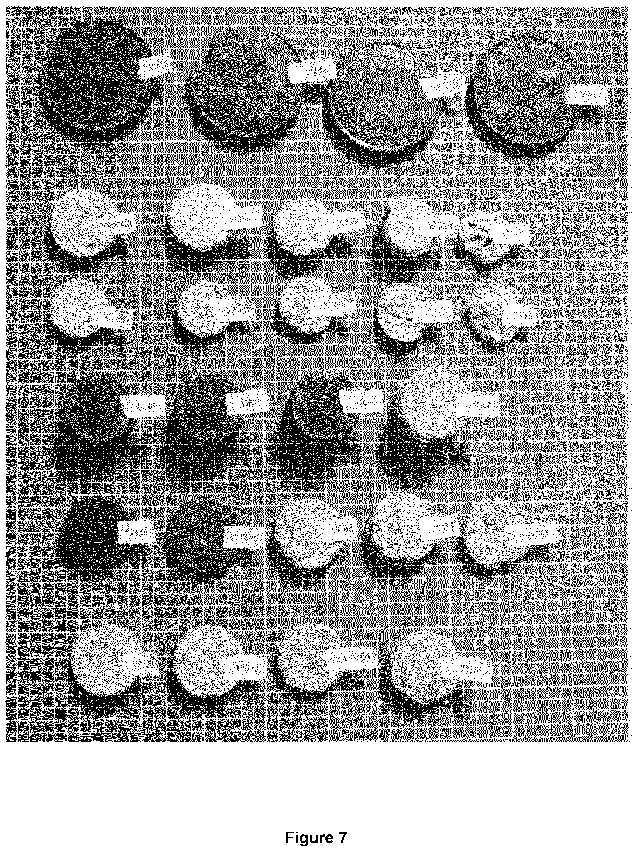

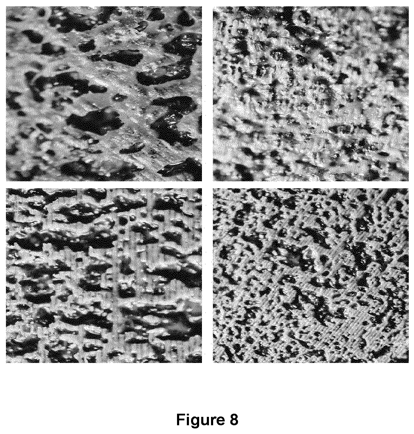

As shown in Figures 7-8, composite materials were obtained as stated detailly to continuation, a dose of 60% micro aggregates and 40% PLA was used, extrusion velocity used was 3500 mm/min, at a temperature between 250°C and 280°C.

## Claims

1. A polymer concrete extruder by thermo-fusion comprising:
a) a main body, receiver in charge of containing the material to extrude by a end, and which corresponds to a steel hollow pipe containing a pushing Archimedes's screw, electric collars to generate heat and a motor to generate torque to the Archimedes's screw, and at the superior end, having a shovel allowing the pass of raw material consisting of polymer pellet, including polylactic acid (PLA), ABS, TPU, PET and micro aggregates, and at the bottom end, having a extrusion steel nozzle, able to support temperatures varying between 0° and 300°C and allowing the pass of composite forward the exterior,
b) a mean to generate torque in charge of mixing polymer and micro-aggregates either inside the main body by means of a worm gear or Archimedes's screw receiving a torque through a motor connected at an end, and which can be rotate at a variable velocity and power and which can be previously set as required,
c) a heating system consisting in means to generate temperature or a near heating source, in charge of melting plastic, preferably, band heaters or collars at the main body of the extruder, which can achieve temperatures between 150°C and 300°C, and thus, can melt plastic without burning and achieving a viscosity allowing a mix with micro aggregates and generate an homogeneous mix can be transported by the worm gear of the screw up to output by the extruder's bottom end.

2. The extruded polymer concrete comprising a matrix of composite polymer mixed with micro aggregates, wherein the range of ratio by weight composite polymer to micro aggregates is 120 gr PLA and 180 gr micro aggregates, and preferably such ratio is 60% micro aggregates and 40% PLA, wherein micro aggregates are selected preferably, from composite volcanic sand mainly basalt with great resistance to compression, and enriched on iron oxide, and wherein such composite polymer preferably, is a composite biopolymer, and even more preferably, such biopolymer is selected from polylactic acid (PLA) or ABS, TPU, PET.

3. Method for preparing concrete polymer, comprising:
a) extruding a thermofusion 3D extruder as described, a composite polymer matrix mixed with micro aggregates, wherein the range of ratio by weight composite polymer to micro aggregates is 120 gr PLA and 180 gr micro aggregates, and preferably, such ratio is 60% micro aggregates and 40% PLA, wherein micro aggregates is selected preferably from volcanic sand mainly composed by basalt with great resistance to compression, and enriched iron oxide, and wherein such composite polymer is a composite biopolymer and even more preferably, such biopolymer is selected from polylactic acid (PLA).
